(19) **Europäisches Patentamt**

**European Patent Office**

**Office européen des brevets**

(11) **EP 0 650 427 B1**

(12) ## FASCICULE DE BREVET EUROPEEN

(45) Date de publication et mention
de la délivrance du brevet:
**05.06.1996 Bulletin 1996/23**

(21) Numéro de dépôt: **93915775.6**

(22) Date de dépôt: **02.07.1993**

(51) Int. Cl.$^6$: **B60T 11/20**

(86) Numéro de dépôt international:
**PCT/EP93/01710**

(87) Numéro de publication internationale:
**WO 94/01311 (20.01.1994 Gazette 1994/03)**

(54) **MAITRE-CYLINDRE TANDEM A DESEQUILIBRE DE PRESSIONS REDUIT**

TANDEM-HAUPTBREMSZYLINDER MIT VERRINGERTEM DRUCKUNTERSCHIED

TANDEM MASTER CYLINDER HAVING REDUCED PRESSURE IMBALANCE

(84) Etats contractants désignés:
**DE ES FR GB IT**

(30) Priorité: **13.07.1992 IT TO920594**

(43) Date de publication de la demande:
**03.05.1995 Bulletin 1995/18**

(73) Titulaire: **AlliedSignal Freni S.p.A.**
**I-70026 Modugno (IT)**

(72) Inventeurs:
• **MANZO, Vincenzo**
**I-70026 Modugno (IT)**

• **TRISTANO, Nicola**
**I-75100 Matera (IT)**

(74) Mandataire: **Bentz, Jean-Paul**
**AlliedSignal Europe Services Techniques**
**Service Brevets**
**126, Rue de Stalingrad**
**93700 Drancy (FR)**

(56) Documents cités:
DE-A- 1 480 463       DE-A- 2 313 375
DE-B- 1 048 169       FR-A- 2 436 048
GB-A- 2 169 368       US-A- 3 421 321

Printed by Rank Xerox (UK) Business Services
2.11.7/3.4

## Description

La présente invention concerne un maître-cylindre-tandem hydraulique comprenant :

- un corps percé d'un alésage essentiellement cylindrique fermé par un fond ;
- des pistons primaire et secondaire susceptibles de coulisser dans l'alésage, de façon étanche, depuis une position de repos dans laquelle ces pistons sont le plus éloignés du fond jusqu'à au moins une position d'actionnement particulière dans laquelle ces pistons sont davantage rapprochés du fond ;
- une chambre hydraulique de pression primaire définie entre les pistons primaire et secondaire, cette chambre renfermant des premiers moyens élastiques présentant une raideur déterminée et exerçant entre les pistons une première force élastique dans un sens qui tend à écarter ces pistons ;
- une chambre hydraulique de pression secondaire définie entre le piston secondaire et le fond, cette chambre renfermant des seconds moyens élastiques présentant une raideur déterminée et exerçant entre le piston secondaire et le fond une seconde force élastique dans un sens qui tend à écarter ce piston secondaire du fond ;
- les première et seconde forces évoluant, pour un déplacement des pistons depuis la position de repos jusqu'à ladite position d'actionnement particulière, depuis des valeurs basses respectives jusqu'à des valeurs hautes respectives, la valeur basse de la seconde force étant supérieur à celle de première force ; dans lequel les premiers moyens élastiques comprennent essentiellement :
- un premier ressort précontraint, propre à exercer à lui seul, dans la position de repos des pistons, la plus grande partie au moins de la valeur basse de première force, et
- un ressort additionnel propre à développer, pour la position d'actionnement particulière des pistons, une force qui s'ajoute à celle du ressort précontraint et qui est plusieurs fois supérieure à la force que développe ce ressort additionnel pour la position de repos des pistons.

Un maître-cylindre de ce type est par exemple illustré dans le document DE-A-1 480 463.

Un problème qui se pose classiquement dans les maîtres-cylindres tandem est de faire en sorte que la pression dans la chambre secondaire soit aussi voisine que possible de celle qui règne dans la chambre primaire pour une course aussi réduite que possible du piston primaire.

La difficulté à surmonter pour résoudre ce problème se situe dans le fait que le ressort primaire doit a priori être aussi raide que possible pour que l'actionnement du piston primaire entraîne rapidement celui du piston secondaire en comprimant le ressort secondaire, alors que le ressort secondaire doit néanmoins être assez raide pour permettre au piston secondaire, en l'absence d'actionnement, de retourner dans sa position de repos.

Ce problème est traditionnellement résolu, comme le montrent les documents DE-A-1 480 463 et DE-A-2 313 375, en utilisant au moins un ressort comprimé dans une cage déformable en compression mais dont la longueur maximale est réglée et prédéterminée.

Le but de la présente invention est de fournir des moyens qui permettent de se dispenser de l'utilisation de telles cages et des opérations de montage et de réglage qu'elles requièrent.

Cet objectif fait lui-même apparaître deux difficultés nouvelles liées à l'absence de réglage, la première tenant au fait que la raideur des ressorts n'est, en l'absence de mesure, connue qu'avec une incertitude relativement importante, et la seconde tenant aux tolérances mécaniques des pièces fabriquées et qui conduisent elles-mêmes à une certaine incertitude sur la longueur des ressorts, sur la distance maximale entre les pistons, etc...

Pour surmonter ces difficultés, le maître-cylindre tandem de l'invention est essentiellement caractérisé en ce que la valeur haute de la seconde force est inférieure à celle de la première force, en ce que le premier ressort précontraint a une raideur au moins égale à celle des seconds moyens élastiques, et en ce que le maître-cylindre n'est pourvu d'aucune cage de ressort.

Les seconds moyens élastiques peuvent alors tout simplement comprendre un second ressort précontraint, de raideur inférieure à celle du premier ressort précontraint.

Le premier ressort précontraint et le ressort additionnel sont avantageusement disposés l'un à l'intérieur de l'autre, le second étant de préférence à l'intérieur du premier.

En outre, il est avantageux que ces ressorts aient des sens d'enroulement opposés de manière à éviter tout accrochage de l'un à l'autre.

D'autres caractéristiques et avantages de l'invention ressortiront clairement de la description qui en est faite ci-après, à titre indicatif et nullement limitatif, en référence aux dessins annexés, sur lesquels :

- La Figure 1 est une vue en coupe d'un maître-cylindre tandem conforme à l'invention ;
- la Figure 2 est un diagramme représentant les efforts (en kilogrammes) exercés par différents ressorts en fonction de leur déformation X en millimètres ; et
- la Figure 3 est une variante de la Figure 2.

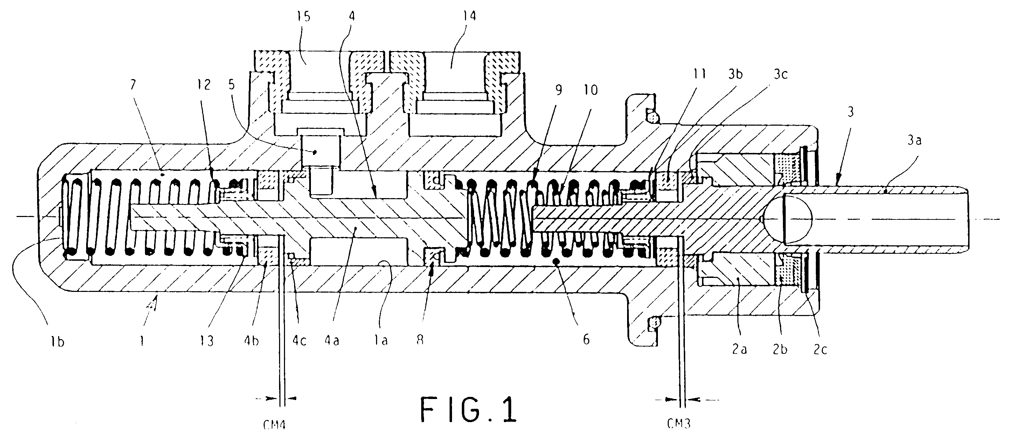

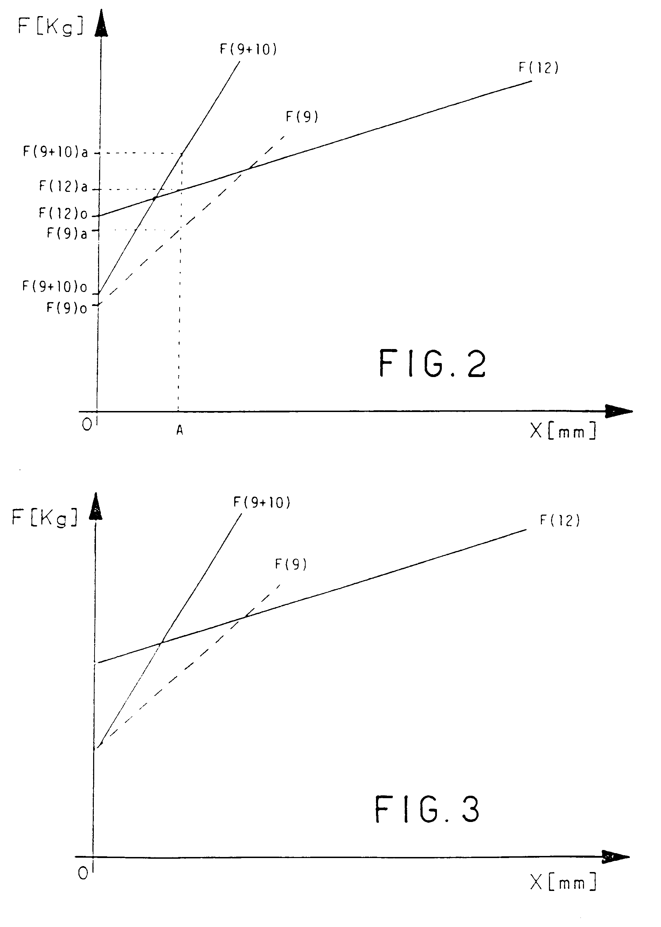

Le maître-cylindre tandem de l'invention n'étant remarquable que sur des points très précis qui seront détaillés plus loin en référence aux Figures 2 et 3, le maître-cylindre de la Figure 1 ressemble globalement à tous les maîtres-cylindres tandem connus, et sa description ne sera donc pas alourdie de détails bien connus de l'homme de l'art et non pertinents à l'égard de l'invention.

Ce maître-cylindre tandem comprend essentiellement un corps 1 percé d'un alésage longitudinal et cylindrique la fermé par un fond 1b et par des organes d'extrémité 2a, 2b, 2c assurant l'étanchéité de l'alésage 1a du côté de son ouverture.

Un piston primaire 3, comportant une tige 3a et des joints d'étanchéité 3b, 3c, peut coulisser de façon étanche dans l'alésage 1a, depuis une position de repos (celle que représente la Figure 1) jusqu'à une position d'actionnement quelconque A (piston déplacé vers la gauche, sur la Figure 1), déterminée par l'intensité d'une force externe appliquée à la tige 3a, laquelle traverse les organes d'extrémité 2a, 2b, 2c.

De même, un piston secondaire 4, comportant une tige 4a et des organes d'étanchéité 4b, 4c coulisse de façon étanche dans l'alésage 1a, depuis une position de repos (celle de la Figure 1) dans laquelle ce piston est arrêté par une butée 5, jusqu'à une position d'actionnement quelconque A (piston déplacé vers la gauche sur la Figure 1), dans laquelle ce piston est plus proche du fond 1b.

Le volume 6 intermédiaire entre les pistons primaire et secondaire 3 et 4 définit une chambre hydraulique de pression primaire, et le volume 7 compris entre le piston secondaire 4 et le fond 1b de l'alésage définit une chambre hydraulique de pression secondaire.

L'étanchéité de la chambre primaire 6 vis-à-vis de la chambre secondaire 7 est assurée par un joint 8 fixé sur la tige 4a du piston secondaire.

Des premiers moyens élastiques 9, 10, s'appuyant d'un côté sur une coupelle 11 solidaire de la tige 3a du piston primaire et de l'autre sur un épaulement de la tige 4a du piston secondaire exercent entre les pistons primaire et secondaire une première force élastique dans un sens qui tend à écarter ces pistons l'un de l'autre.

De même, des seconds moyens élastiques 12 s'appuyant d'un côté sur une coupelle 13 solidaire de la tige 4a du piston secondaire et de l'autre sur le fond 1b de l'alésage exercent entre ce fond et le piston secondaire 4 une force qui tend à écarter ce piston du fond.

Le fonctionnement du maître -cylindre tandem est le suivant : Dans la position de repos des pistons 3 et 4, les chambres primaire et secondaire 6 et 7 communiquent avec des réservoirs respectifs de liquide de frein (non représentés), à travers les ouvertures respectives 14 et 15 et des conduits non représentés. Ces chambres sont donc remplies de liquide de frein.

Lorsqu'une force suffisante est exercée vers la gauche sur la tige 3a, le piston primaire 3 se déplace dans une position pour laquelle la chambre primaire 6 cesse de communiquer avec l'ouverture 14. La pression augmente dans cette chambre et se trouve communiquée, à travers des conduits non visibles sur la figure, à deux cylindres de roues qui actionnent des freins correspondants du véhicule.

Le piston secondaire 4, qui reçoit d'abord une partie de la force d'actionnement du piston primaire 3 à travers les premiers moyens élastiques 9, 10, puis l'effort résultant de l'élévation de la pression dans la chambre primaire 6, se déplace à son tour vers le fond 1b, à l'encontre de l'effort exercé par le ressort 12. La pression augmente alors dans la chambre secondaire 7 et se trouve communiquée, à travers des conduits non visibles sur la figure, à deux autres cylindres de roues qui actionnent des freins correspondants du véhicule.

Dans ce contexte général connu, l'invention vise à fournir des moyens aussi simples et peu coûteux que possible qui permettent de faire en sorte que la pression dans la chambre secondaire 7 suive d'aussi près que possible, et pour une course aussi réduite que possible du piston primaire 3, la pression dans la chambre primaire 6.

En particulier, il est important que la course morte CM3 du piston primaire 3 reste très faible et que le piston secondaire 4 rattrape sa course morte CM4 aussi rapidement que possible après l'actionnement du piston primaire 3.

Pour ce faire, les premiers moyens élastiques 9, 10 sont essentiellement constitués par un premier ressort précontraint 9 et un ressort additionnel 10, et les seconds moyens élastiques 12 sont essentiellement constitués par le second ressort précontraint 12, ces ressorts ayant les caractéristiques identifiées sur les Figures 2 et 3.

Plus précisément, les premier et second ressorts 9 et 12 sont précontraints, dans la position de repos des pistons, d'une manière telle que la force $F(9)o$, ou charge en siège, alors exercée par le premier ressort 9 soit sensiblement inférieure à la charge en siège $F(12)o$ exercée par le second ressort 12, et par exemple au plus égale aux trois quarts de cette dernière.

En revanche, la raideur du premier ressort précontraint 9, c'est-à-dire la pente de la courbe (généralement rectiligne) qui représente l'évolution de la force $F(9)$ exercée par ce ressort en fonction de sa déformation X, est sensiblement supérieure à celle du second ressort précontraint 12, et par exemple égale à au moins deux fois cette dernière.

Par ailleurs, le ressort additionnel 10 est monté avec une charge en siège $F(10)o = F(9 + 10)o - F(9)o$ , aussi réduite que possible et idéalement nulle, mais présente une longueur telle qu'il exerce, dès que le piston primaire 3 est déplacé, une force $F(10) = F(9 + 10) - F(9)$ , qui s'ajoute à la force $F(9)$ du ressort 9 et qui devient rapidement plusieurs fois supérieure à la charge en siège $F(10)o$.

Comme le montre la Figure 2, et si l'indice "a" est affecté aux forces s'exerçant pour la position d'actionnement A, ces caractéristiques conduisent à ce que :

$$F(9 + 10)a > F(12)a, \text{ alors même que}$$

$$F(12)a > F(9)a.$$

Les Figures 2 et 3 permettent de mieux apprécier l'intérêt de l'invention.

En effet, il semblerait en théorie que les ressorts 9 et 10 soient équivalents à un ressort de charge en siège

F(9 + 10)o et de raideur correspondant à la pente de la droite F(9 + 10), et puissent donc être remplacés par un tel ressort unique.

En pratique, il n'en est rien et ceci pour les raisons déjà évoquées.

D'abord, en l'absence de mesure, l'incertitude sur la raideur d'un ressort est d'autant plus grande que la valeur de celle-ci est élevée.

De plus, l'incertitude sur la charge en siège d'un ressort précontraint varie d'autant plus, en fonction de l'incertitude sur les longueurs de ce ressort au repos et sous contrainte, que la raideur de ce même ressort est élevée.

La présente invention ne se limite donc pas à associer plusieurs ressorts de raideur moyenne pour obtenir, comme c'est le cas dans le brevet GB 2 169 368, un ressort équivalent de raideur plus élevée, mais découple les effets de charge en siège et de raideur globale, par l'emploi de deux ressorts, pour simplifier la fabrication des maîtres-cylindres tandem et limiter la dispersion de leurs caractéristiques.

La Figure 2 illustre le cas où le ressort additionnel 10, en raison des tolérances dimensionnelles, est monté avec une légère charge en siège, alors que la Figure 3 illustre le cas où ce ressort 10, toujours pour les mêmes raison parasites, est monté avec un certain jeu.

Comme le montre l'examen de ces figures l'effet global de ces incertitudes de fabrication est minime dans le cas de l'invention, alors qu'il serait considérable dans le cas de l'utilisation d'un ressort primaire unique.

Comme le montre la Figure 1, le ressort additionnel 10 est de préférence monté à l'intérieur du premier ressort précontraint 9, concentrique avec lui, et son sens d'enroulement est opposé à celui de ce premier ressort précontraint 9.

## Revendications

1. Maître-cylindre tandem hydraulique comprenant :

   - un corps (1) percé d'un alésage essentiellement cylindrique fermé par un fond (1b) ;
   - des pistons primaire (3) et secondaire (4) susceptibles de coulisser dans l'alésage, de façon étanche, depuis une position de repos dans laquelle ces pistons sont le plus éloignés du fond jusqu'à au moins une position d'actionnement particulière (A) dans laquelle ces pistons sont davantage rapprochés du fond ;
   - une chambre hydraulique de pression primaire (6) définie entre les pistons primaire et secondaire, cette chambre renfermant des premiers moyens élastiques (9, 10) présentant une raideur déterminée et exerçant entre les pistons une première force élastique dans un sens qui tend à écarter ces pistons ;
   - une chambre hydraulique de pression secondaire (7) définie entre le piston secondaire et le fond, cette chambre renfermant des seconds moyens élastiques (12) présentant une raideur déterminée et exerçant entre le piston secondaire et le fond une seconde force élastique dans un sens qui tend à écarter ce piston secondaire du fond ;

   - les première et seconde forces évoluant, pour un déplacement des pistons depuis la position de repos jusqu'à ladite position d'actionnement particulière, depuis des valeurs basses respectives jusqu'à des valeurs hautes respectives, la valeur basse ( F(12)o ) de la seconde force étant supérieure à celle ( F(9 + 10)o ) de la première force : dans lesquel les premiers moyens élastiques comprennent essentiellement :

   - un premier ressort précontraint (9), propre à exercer à lui seul, dans la position de repos des pistons, la plus grande partie au moins de la valeur basse de la première force, et

   - un ressort additionnel (10) propre a développer, pour la position d'actionnement particulière des pistons, une force qui s'ajoute à celle du ressort précontraint et qui est plusieurs fois supérieure à la force que développe ce ressort additionnel pour la position de repos des pistons, caractérisé en ce que la valeur haute ( F(12)a ) de la seconde force est inférieure à celle ( F(9 + 10)a ) de la première force, en ce que le premier ressort précontraint a une raideur au moins égale à celle des seconds moyens élastiques, et en ce que le maître-cylindre n'est pourvu d'aucune cage de ressort.

2. Maître-cylindre suivant la revendication 1, caractérisé en ce que les seconds moyens élastiques comprennent essentiellement un second ressort précontraint (12), de raideur inférieure à celle du premier ressort précontraint(9).

3. Maître-cylindre suivant la revendication 2, caractérisé en ce que le premier ressort précontraint (9) et le ressort additionnel (10) sont disposés l'un à l'intérieur de l'autre.

4. Maître cylindre suivant la revendication 3, caractérisé en ce que le ressort additionnel (10) est logé à l'intérieur du premier ressort précontraint (9).

5. Maître-cylindre suivant la revendication 3, caractérisé en ce que le ressort additionnel (10) et le premier ressort précontraint (9) ont des sens d'enroulement opposés.

## Claims

1. Hydraulic tandem master cylinder comprising:

   - a body (1) drilled through by an essentially cylindrical bore closed by an end-cap (1b);

- primary (3) and secondary (4) pistons capable of sliding in the bore, in a sealed fashion, from a rest position in which these pistons are furthest away from the end-cap as far as at least one specific actuation position (A) in which these pistons are moved closer to the end-cap;
- a primary hydraulic pressure chamber (6) defined between the primary and secondary pistons, this chamber containing first elastic means (9, 10) having a predetermined stiffness and exerting a first elastic force between the pistons in a direction which tends to move these pistons apart;
- a secondary hydraulic pressure chamber (7) defined between the secondary piston and the end-cap, this chamber containing second elastic means (12) having a predetermined stiffness and exerting a second elastic force between the secondary piston and the end-cap, in a direction which tends to move this secondary piston away from the end-cap,
- the first and second forces varying, for a movement of the pistons from the rest position as far as the said specific actuation position, from respective low values up to respective high values, the low value $(F(12)_o)$ of the second force being greater than that $(F(9+10)_o)$ of the first force; in which the first elastic means essentially comprise:
- a first prestressed spring (9) suitable for exerting, by itself, in the rest position of the pistons, at least the greatest part of the low value of the first force, and
- an additional spring (10) suitable for developing, for the specific position for actuating the pistons, a force which is added to that of the prestressed spring and which is several times greater than the force which this additional spring develops for the rest position of the pistons, characterized in that the high value $(F(12)_a)$ of the second force is less than that $(F(9+10)_a)$ of the first force, in that the first prestressed spring has a stiffness at least equal to that of the second elastic means, and in that the master-cylinder has any spring cage.

2. Master cylinder according to Claim 1, characterized in that the second elastic means essentially comprise a second prestressed spring (12) of stiffness less than that of the first prestressed spring (9).

3. Master cylinder according to Claim 2, characterized in that the first prestressed spring (9) and the additional spring (10) are arranged one inside the other.

4. Master cylinder according to Claim 3, characterized in that the additional spring (10) is housed inside the first prestressed spring (9).

5. Master cylinder according to Claim 3, characterized in that the additional spring (10) and the first prestressed spring (9) are coiled in opposite directions.

**Patentansprüche**

1. Hydraulischer Tandem-Hauptzylinder mit:

- einem Körper (1), der von einer im wesentlichen zylindrischen Bohrung durchbrochen ist, die von einem Boden (1b) verschlossen ist;
- einem Primärkolben (3) und einem Sekundärkolben (4), die in dichter Weise in der Bohrung aus einer Ruhestellung, in welcher sich die Kolben am weitesten von dem Boden entfernt befinden, bis in wenigstens eine bestimmte Betätigungsstellung (A) gleiten können, in welcher sich die Kolben näher an dem Boden befinden;
- einer Primärdruck-Hydraulikkammer (6), die zwischen dem Primär- und dem Sekundärkolben abgegrenzt ist, wobei diese Kammer erste elastische Mittel (9, 10) umschließt, welche eine bestimmte Steifigkeit aufweisen und zwischen den Kolben eine erste elastische Kraft in einer Richtung ausüben, welche die Kolben voneinander zu entfernen sucht;
- einer Sekundärdruck-Hydraulikkammer (7), die zwischen dem Sekundärkolben und dem Boden abgegrenzt ist, wobei diese Kammer zweite elastische Mittel (12) umschließt, welche eine bestimmte Steifigkeit aufweisen und zwischen dem Sekundärkolben und dem Boden eine zweite elastische Kraft in einer Richtung ausüben, welche den Sekundärkolben von dem Boden zu entfernen sucht;
- wobei sich die erste und die zweite Kraft bei einer Verstellung der Kolben aus der Ruhestellung bis zu der bestimmten Betätigungsstellung von entsprechenden niedrigen Werten bis zu entsprechenden hohen Werten entwickeln, wobei der niedrige Wert $(F(12)o)$ der zweiten Kraft größer als derjenige $(F(9+10)o)$ der ersten Kraft ist; wobei die ersten elastischen Mittel im wesentlichen enthalten:
- eine erste vorgespannte Feder (9), die in der Ruhestellung der Kolben für sich allein wenigstens den größeren Teil des niedrigen Werts der ersten Kraft ausüben kann, und
- eine Zusatzfeder (10), die für die bestimmte Betätigungsstellung der Kolben eine Kraft entwickeln kann, die sich zu derjenigen der vorgespannten Feder hinzuaddiert und die um ein Vielfaches größer als die Kraft ist, die für die Ruhestellung der Kolben von der Zusatzfeder entwickelt wird, dadurch gekennzeichnet, daß der hohe Wert $(F(12)a)$ der zweiten Kraft kleiner als derjenige $(F(9+10)a)$ der ersten Kraft ist, daß die erste vorgespannte Feder eine Steifigkeit aufweist, die wenigstens gleich derjenigen der zweiten elastischen Mittel ist, und daß der Hauptzylinder keinen Federkäfig aufweist.

2.  Hauptzylinder nach Anspruch 1, dadurch gekennzeichnet, daß die zweiten elastischen Mittel im wesentlichen eine zweite vorgespannte Feder (12) enthalten, deren Steifigkeit geringer als diejenige der ersten vorgespannten Feder (9) ist.

3.  Hauptzylinder nach Anspruch 2, dadurch gekennzeichnet, daß die erste vorgespannte Feder (9) und die Zusatzfeder (10) ineinander angeordnet sind.

4.  Hauptzylinder nach Anspruch 3, dadurch gekennzeichnet, daß die Zusatzfeder (10) im Inneren der ersten vorgespannten Feder (9) aufgenommen ist.

5.  Hauptzylinder nach Anspruch 3, dadurch gekennzeichnet, daß die Zusatzfeder (10) und die erste vorgespannte Feder (9) entgegengesetzte Windungsrichtungen aufweisen.

FIG.1

F I G. 2

F I G. 3